# EUROPÄISCHE PATENTSCHRIFT

(11) **EP 2 982 427 B1**
(45) Veröffentlichungstag und Bekanntmachung des Hinweises auf die Patenterteilung: **22.01.2020**
(21) Anmeldenummer: 15176127.7
(22) Anmeldetag: 09.07.2015
(51) Int. Cl.: B01D 46/00, B01D 46/24

(54) **GEHÄUSE UND EINRICHTUNG ZUR ABSCHEIDUNG EINES FLUIDS**
HOUSING AND DEVICE FOR FLUID SEPARATION
BOITIER ET DISPOSITIF DESTINE A SEPARER UN FLUIDE

(30) Priorität: 04.08.2014 DE 102014011303
(43) Veröffentlichungstag der Anmeldung: 10.02.2016
(73) Patentinhaber: MANN + HUMMEL GMBH, 71636 Ludwigsburg (DE)
(72) Erfinder: Dworatzek, Klemens, 68535 Edingen (DE); Bartelt, Bertram, 71711 Steinheim (DE); Schmelzle, Janine, 76187 Karlsruhe (DE)

(56) Entgegenhaltungen:
- EP-A1- 2 762 219
- DE-A1-102008 046 499
- DE-U1- 8 501 736

## Beschreibung

### Technisches Gebiet

Die Erfindung betrifft ein Gehäuse einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit wenigstens einem ersten Gasdurchlass, der bzgl. einer Achse, insbesondere einer Montageachse des Gehäuses an einer Anschlusseinrichtung, zentral, insbesondere koaxial, angeordnet ist, mit wenigstens einem zweiten Gasdurchlass, der bzgl. der Achse radial außerhalb des wenigstens einen ersten Gasdurchlasses angeordnet ist, und mit wenigstens einem Fluidauslass für von dem Gas abgeschiedenes Fluid, der bzgl. der Achse radial zwischen dem wenigstens einen ersten Gasdurchlass und dem wenigstens einen zweiten Gasdurchlass angeordnet ist.

Die Erfindung betrifft ferner einen Gehäusedeckel eines Gehäuses einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit wenigstens einem ersten Gasdurchlass, der bzgl. einer Achse, insbesondere einer Montageachse des Gehäuses an einer Anschlusseinrichtung, zentral, insbesondere koaxial, angeordnet ist, mit wenigstens einem zweiten Gasdurchlass, der bzgl. der Achse radial außerhalb des wenigstens einen ersten Gasdurchlasses angeordnet ist, und mit wenigstens einem Fluidauslass für von dem Gas abgeschiedenes Fluid, der bzgl. der Achse radial zwischen dem wenigstens einen ersten Gasdurchlass und dem wenigstens einen zweiten Gasdurchlass angeordnet ist.

Die Erfindung betrifft außerdem ein Verbindungsteil, insbesondere einen Verbindungsnippel oder Verbindungsrohrstutzen, zum Verbinden einer Einrichtung zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, mit einer Anschlusseinrichtung, mit wenigstens einem gasleitenden Raum, insbesondere Innenraum, für wenigstens einen ersten Gasdurchlass eines Gehäuses der Einrichtung.

Die Erfindung betrifft schließlich eine Einrichtung zur Abscheidung wenigstens eines Fluids, insbesondere Öl, aus Gas, insbesondere Luft, insbesondere eine Luftentölbox oder ein Luftentölelement, insbesondere eines Kompressors, einer Druckluftanlage oder einer Vakuumpumpe, mit einem Gehäuse mit wenigstens einem ersten Gasdurchlass, der bzgl. einer Achse, insbesondere einer Montageachse des Gehäuses an einer Anschlusseinrichtung, zentral, insbesondere koaxial, angeordnet ist, mit wenigstens einem zweiten Gasdurchlass, der bzgl. der Achse radial außerhalb des wenigstens einen ersten Gasdurchlasses angeordnet ist, und mit wenigstens einem Fluidauslass für von dem Gas abgeschiedenes Fluid, der bzgl. der Achse radial zwischen dem wenigstens einen ersten Gasdurchlass und dem wenigstens einen zweiten Gasdurchlass angeordnet ist.

### Stand der Technik

Aus der DE 8501736 U1 ist eine Vorrichtung zum Abscheiden von Öltröpfchen aus Luft mit einem Abscheiderkopf bekannt. Der Abscheiderkopf hat einen außermittig angeordneten Zuströmkanal für die Rohluft und einen zentralen Abströmkanal für die Reinluft. Ein Gehäusedeckel verschließt ein Gehäuse an einer unteren Stirnseite. Der Gehäusedeckel weist eine zentrale Gewindebohrung zum Aufschrauben auf einen an dem Abscheiderkopf festgelegenen Gewinderohrstutzen auf. Ferner weist der Gehäusedeckel radial außerhalb der Gewindebohrung einen konzentrischen Dichtring zur abdichtenden Anlage am Abscheiderkopf auf. Der Gehäusedeckel ist mit an den Zuströmkanal angeschlossenen Zuströmöffnungen im Bereich zwischen der Gewindebohrung und dem Dichtring versehen. Ein an einen separaten Ablasskanal angeschlossener Ringspalt dient zum Abführen des abgeschiedenen Öls.

EP 2 762 219 A1 beschreibt eine Vorrichtung zum Abscheiden von Flüssigkeit aus Luft, wobei ein Gehäusedeckel eines becherförmigen Gehäuses eine reinluftseitige Öffnung zum Abführen gefilterter Reinluft und einen Rohlufteinlass zum Zuführen von Rohluft aufweist. Zum Abdichten zwischen Rohluftseite und Reinluftseite ist an der vom Innenraum des becherförmigen Gehäuses abgewandten Außenseite des Gehäusedeckels zumindest bereichsweise mindestens eine Dichtfläche angeordnet.
Aus DE 10 2008 046 499 A1 ist ein Filter mit Drainageanschluss bekannt, der dicht mit einem Anschlusskopf verbunden werden kann. Es wird eine Steckdichtung mit radial gegenüberliegenden Dichtflächen einer Außendichtung und einer Innendichtung verwendet.

Der Erfindung liegt die Aufgabe zugrunde, ein Gehäuse, einen Gehäusedeckel, ein Verbindungsteil und eine Einrichtung der eingangs genannten Art zu gestalten, bei denen eine Dichtheit von Verbindungen wenigstens eines Gasdurchlasses und/oder wenigstens eines Fluidauslasses, insbesondere Flüssigkeitsauslasses des Gehäuses mit der Anschlusseinrichtung und/oder dem Verbindungsteil verbessert werden kann. Insbesondere sollen etwaige, insbesondere bauteilbedingte und/oder montagebedingte Toleranzen besser ausgeglichen werden können.

### Offenbarung der Erfindung

Diese Aufgabe wird von einem Gehäuse nach Anspruch 1 gelöst.

Erfindungsgemäß ist zwischen dem wenigstens einen zweiten, äußeren Gasdurchlass und dem wenigstens einen Fluidauslass wenigstens ein gehäuseseitiges Fluidauslass-Dichtungsteil wenigstens einer Fluidauslass-Dichteinrichtung angeordnet. Das wenigstens eine gehäuseseitige Fluidauslass-Dichtungsteil kann mit wenigstens einem entsprechenden verbindungsseitigen Fluidauslass-Dichtungsteil des Verbindungsteils dichtend zusammenwirken. Mit der wenigstens einen Fluidauslass-Dichteinrichtung kann der wenigstens eine zweite Gasdurchlass gegen den wenigstens einen Fluidauslass abgedichtet werden. Auf diese Weise kann die Gefahr verringert werden, dass Gas aus dem wenigstens einen zweiten Gasdurchlass in den wenigstens einen Fluidauslass und/oder abgeschiedenes Fluid aus dem wenigstens einen Fluidauslass in den wenigstens einen zweiten Gasdurchlass gelangen kann.

Das Verbindungsteil dient zur Verbindung des Gehäuses mit der Anschlusseinrichtung, insbesondere mit entsprechenden Fluidleitungen und/oder Gasleitungen. Wenigstens ein Teil des Verbindungsteils kann Teil des Gehäuses sein oder mit diesem fest oder lösbar verbunden, insbesondere vormontiert, sein. Alternativ oder zusätzlich kann wenigstens ein Teil des Verbindungsteils Teil der Anschlusseinrichtung sein oder mit dieser fest oder lösbar verbunden, insbesondere vormontiert, sein. Entsprechend kann das wenigstens eine verbindungsseitige Fluidauslass-Dichtungsteil mit dem Verbindungsteil und/oder der Anschlusseinrichtung fest oder lösbar verbunden sein.

Das wenigstens eine gehäuseseitige Fluidauslass-Dichtungsteil kann mit dem wenigstens einen verbindungsseitigen Fluidauslass-Dichtungsteil insbesondere automatisch dichtend zusammenwirken, wenn das Gehäuse entsprechend mit dem wenigstens einen entsprechenden Fluidauslass-Dichtungsteil des Verbindungsteils und/oder der Anschlusseinrichtung verbunden wird.

Bei der Anschlusseinrichtung kann es sich vorteilhafterweise um einen Anschlusskopf handeln. Der Anschlusskopf kann entsprechende Zuleitungen und/oder Ableitungen für das Gas und/oder das abgeschiedene Fluid aufweisen.

Das Verbindungsteil kann vorteilhafterweise gehäuseseitig mit dem Gehäuse und/oder anschlussseitig mit der Anschlusseinrichtung fest oder lösbar verbunden sein.

Vorteilhafterweise kann das Verbindungsteil einen rohrartigen, insbesondere zylindrischen und/oder konischen, Anschlussstutzen oder Anschlussabschnitt aufweisen. Der rohrartige Anschlussstutzen kann, insbesondere wenn er anschlussseitig und gehäuseseitig lösbar verbindbar ist, auch als Nippel oder Anschlussnippel bezeichnet werden.

Das Gehäuse wird mittels einer Drehverbindung mit der Anschlusseinrichtung verbunden. Die Drehverbindung kann vorteilhafterweise bzgl. der Achse drehbar sein. In diesem Fall kann die Achse mit einer Montageachse des Gehäuses mit der Anschlusseinrichtung, insbesondere des Gehäuses mit dem Verbindungsteil und/oder des Verbindungsteils mit der Anschlusseinrichtung, zusammenfallen. Das Gehäuse kann insbesondere mittels einer Schraubverbindung direkt oder indirekt mittels des Verbindungsteils in oder auf die Anschlusseinrichtung geschraubt werden.

Vorteilhafterweise kann die Achse, insbesondere Montageachse, koaxial oder parallel zu einer Gehäuseachse des Gehäuses und/oder einer Elementachse eines in dem Gehäuse angeordneten Filter- und/oder Abscheideelements sein. Vorteilhafterweise kann die Achse koaxial zu einer Achse des Verbindungsteils sein.

Das Verbindungsteil weist zumindest ein Verbindungselement einer Schraubverbindung zum Verbinden mit dem Gehäuse auf. Das Verbindungsteil kann weiterhin wenigstens ein Verbindungselement zum Verbinden mit der Anschlusseinrichtung, insbesondere mittels einer Dreh-und/oder Steckverbindung, insbesondere einer Schraubverbindung, einer Steckverbindung, einer Klemmverbindung, einer Rastverbindung und/oder einer bajonettartigen Verbindung oder dergleichen, aufweisen. Insbesondere kann das Verbindungsteil wenigstens ein Außengewinde und/oder wenigstens ein Innengewinde aufweisen. Entsprechend kann das Gehäuse und/oder die Anschlusseinrichtung wenigstens ein passendes Innengewinde und/oder wenigstens ein Außengewinde aufweisen. Die Gewinde können vorteilhafterweise koaxial zur Achse, insbesondere Montageachse, sein.

Das Gehäuse kann vorteilhafterweise becherförmig oder topfförmig sein. Das Gehäuse, insbesondere ein Gehäusetopf, ist an einer Stirnseite mit einem Gehäusedeckel verschlossen. Das Verbindungsteil wird an einer Stirnseite mit dem Gehäusedeckel verbunden.

Vorteilhafterweise kann das Gehäuse, insbesondere der Gehäusetopf und/oder der Gehäusedeckel, aus Metall und/oder Kunststoff sein oder eines dieser Materialien wenigstens aufweisen.

Vorteilhafterweise kann das Gehäuse, insbesondere der Gehäusetopf und/oder der Gehäusedeckel, axial oder koaxial zur Achse, insbesondere Montageachse, sein.

In dem Gehäuse ist wenigstens ein Abscheideelement zur Abscheidung des Fluids von Gas, insbesondere wenigstens ein Filterelement, wenigstens ein Koaleszenzelement, wenigstens eine Abscheide- oder Prallwand und/oder ein Zyklon oder dergleichen oder eine Kombination von unterschiedlichen Abscheideelementen, angeordnet. Mit dem wenigstens einen Abscheideelement kann das Fluid von der Gas abgeschieden werden.

Vorteilhafterweise kann in dem Gehäuse wenigstens eine Filtereinrichtung zum Filtrieren Gases, insbesondere ein Luftfilterelement, angeordnet sein.

Vorteilhafterweise kann wenigstens ein Filtermedium mit wenigstens einem Abscheidemedium, insbesondere einem Koaleszenzmedium, für das Fluid, insbesondere einer Flüssigkeit, kombiniert oder verbunden sein. Auf diese Weise kann ein Bauraumbedarf verringert werden.

Vorteilhafterweise kann wenigstens ein Abscheideelement und/oder wenigstens eine Filtereinrichtung, insbesondere ein Filtermedium, die Achse, insbesondere Montageachse, umfangsmäßig, insbesondere geschlossen, umgeben. Insbesondere kann das wenigstens eine Abscheideelement und/oder die wenigstens eine Filtereinrichtung axial oder koaxial zur Achse, insbesondere Montageachse, sein.

Vorteilhafterweise kann der wenigstens eine erste Gasdurchlass für eine Gasströmung beim Betrieb der Einrichtung zur Abscheidung eines Fluids vorgesehen sein, die bzgl. einem Innenraum des Gehäuses entgegengesetzt zu einer Gasströmung durch den wenigstens einen zweiten Gasdurchlass gerichtet ist. Vorteilhafterweise kann der wenigstens eine erste Gasdurchlass ein Gasauslass für behandeltes Gas sein. Der wenigstens eine zweite Gasdurchlass kann entsprechend ein Gaseinlass für zu behandelndes Gas sein. Alternativ kann der wenigstens eine erste Gasdurchlass ein Gaseinlass und der wenigstens eine zweite Gasdurchlass ein Gasauslass sein.

Das wenigstens eine Abscheideelement und/oder die wenigstens eine Filtereinrichtung kann vorteilhafterweise zwischen wenigstens einem Gaseinlass und wenigstens einem Gasauslass angeordnet sein und diese voneinander trennen. Auf diese Weise kann das wenigstens eine Abscheideelement und/oder die wenigstens eine Filtereinrichtung von dem Gas zwangsdurchströmt werden.

Das Gas kann das wenigstens eine Abscheideelement und/oder die wenigstens eine Filtereinrichtung bzgl. der Achse, insbesondere Montageachse, von radial außen nach radial innen oder umgekehrt durchströmen, abhängig davon, welcher der Gasdurchlässe als Gaseinlass und welcher als Gasauslass dient.

Das wenigstens eine Fluid, insbesondere eine Flüssigkeit wie zum Beispiel Öl, kann mit dem wenigstens einen Abscheideelement von dem Gas abgeschieden werden. Das Fluid kann der Schwerkraft folgend nach unten in einen unteren Bereich des Gehäuses sinken.

Vorteilhafterweise kann der wenigstens eine Fluidauslass in einem unteren Bereich aus dem Gehäuse führen. Das abgeschiedene Fluid kann so durch den wenigstens einen Fluidauslass das Gehäuse verlassen. Der wenigstens eine Fluidauslass kann mit einem Fluidkanal insbesondere in oder an dem Verbindungsteil und/oder der Anschlusseinrichtung verbunden sein/werden.

Vorteilhafterweise kann das wenigstens eine gehäuseseitige Fluidauslass-Dichtungsteil an einer Stirnseite des Gehäuses, insbesondere gegebenenfalls an dem Gehäusedeckel, angeordnet sein.

Vorteilhafterweise kann das wenigstens eine gehäuseseitige Fluidauslass-Dichtungsteil bzgl. der Achse, insbesondere Montageachse, wenigstens teilumfänglich verlaufen. Vorteilhafterweise kann das wenigstens eine gehäuseseitige Fluidauslass-Dichtungsteil die Achse, insbesondere Montageachse, umfangsmäßig geschlossen umgeben.

Vorteilhafterweise kann das wenigstens eine gehäuseseitige Fluidauslass-Dichtungsteil wenigstens einen insbesondere bzgl. der Fluidströmung stromabwärtigen Abschnitt des wenigstens einen Fluidauslasses umfangsmäßig insbesondere geschlossen umgeben.

Vorteilhafterweise kann der wenigstens eine zweite Gasdurchlass bzgl. der Achse, insbesondere Montageachse, radial außerhalb des wenigstens einen gehäuseseitigen Fluidauslass-Dichtungsteils angeordnet sein.

Vorteilhafterweise kann eine Mehrzahl von zweiten Gasdurchlässen bzgl. der Achse, insbesondere Montageachse, umfangsmäßig insbesondere gleichmäßig verteilt angeordnet sein.

Vorteilhafterweise können wenigstens ein erster Gasdurchlass, wenigstens ein zweiter Gasdurchlass und wenigstens ein Fluidauslass an derselben Stirnseite des Gehäuses, insbesondere an oder in dem Gehäusedeckel, angeordnet sein. Auf diese Weise kann eine Verbindung des Gehäuses mit dem Verbindungsteil und/oder der Anschlusseinrichtung einfacher und/oder platzsparender realisiert werden.

Vorteilhafterweise kann die Erfindung bei einer Gasentölvorrichtung, insbesondere einer Luftentölvorrichtung, insbesondere mit einer so genannten Luftentölbox oder einem so genannten Luftentölelement, verwendet werden. Mit einer Gasentölvorrichtung können etwaige mit Gas mitgetragene Öltröpfchen abgeschieden und entfernt werden. Derartige Gasentölvorrichtungen können vorteilhafterweise bei Kompressoren, Vakuumpumpen oder Druckluftanlagen verwendet werden. Sie können vor einem Gaseinlass des entsprechenden Gerätes angeordnet sein. Auf diese Weise kann das Gas entölt werden, bevor es in das Gerät gelangt. Alternativ oder zusätzlich kann wenigstens eine Gasentölvorrichtung nach einem Gasauslass des Geräts angeordnet sein. Auf diese Weise kann Öl, welches insbesondere beim Betrieb des Gerätes in das Gas gelangen kann, nach dem Austritt aus dem Gerät entfernt werden. Vorteilhafterweise kann die Anschlusseinrichtung mit entsprechenden Gasleitungen versehen sein.

Die Erfindung kann auch in Verbindung mit einer Brennkraftmaschine, insbesondere einem Ansaugtrakt für Verbrennungsgas, insbesondere Verbrennungsluft, oder einer Kurbelgehäuseentlüftung, verwendet werden. Die Erfindung kann bei Brennkraftmaschinen von Kraftfahrzeugen oder andersartigen Brennkraftmaschinen, insbesondere Industriemotoren, eingesetzt werden. Sie kann auch außerhalb von Brennkraftmaschinen, insbesondere bei Kraftfahrzeugen, verwendet werden.

Die Erfindung kann statt bei einer Einrichtung zur Abscheidung von Öl auch zur Abscheidung von andersartigen Fluiden aus Gas verwendet werden. Sie kann auch in Verbindung mit einer Raumluftanlage oder Klimaanlage eingesetzt werden.

Erfindungsgemäß kann wenigstens ein gehäuseseitiges Fluidauslass-Dichtungsteil mit wenigstens einem verbindungsseitigen Fluidauslass-Dichtungsteil bzgl. der Achse, insbesondere Montageachse, wenigstens radial dichtend zusammenwirken. Erfindungsgemäß können bei der Verbindung des Gehäuses mit dem Verbindungsteil und/oder der Anschlusseinrichtung das gehäuseseitige Fluidauslass-Dichtungsteil und das verbindungsseitige Fluidauslass-Dichtungsteil wenigstens in radialer Richtung aneinander liegen.

Vorteilhafterweise können auf die die Fluidauslass-Dichtungsteile wirkende Dichtkräfte ausschließlich radial zur Achse, insbesondere Montageachse, gerichtet sein. Zusätzlich können auch axiale Kraftkomponenten vorliegen. Die Fluidauslass-Dichtungsteile können dann radial und axial abdichten.

Eine radial dichtende Dichteinrichtung hat den Vorteil, dass die Dichtungskräfte im Wesentlichen senkrecht zu entsprechenden Montagekräften gerichtet sind, die zwischen dem Gehäuse einerseits und dem Verbindungsteil und/oder der Anschlusseinrichtung andererseits wirken. Die Montagekräfte sind parallel oder koaxial zur Achse, insbesondere Montageachse. Auf diese Weise können etwaige Maßtoleranzen zwischen dem Gehäuse und dem Verbindungsteil und/oder der Anschlusseinrichtung besser ausgeglichen werden. Ferner können so mechanische Belastungen auf die wenigstens eine Fluidauslass-Dichteinrichtung verringert werden. Derartige mechanische Belastungen können insbesondere durch betriebsbedingte Vibrationen oder Schwingungen hervorgerufen werden.

Ferner kann beim Zusammenbringen des Gehäuses mit dem Verbindungsteil und/oder der Anschlusseinrichtung axial zur Achse, insbesondere Montageachse, die radial wirkende Fluidauslass-Dichteinrichtung eine Maßtoleranz in axialer Richtung einfach ausgleichen.

Wenigstens ein gehäuseseitiges Fluidauslass-Dichtungsteil weist wenigstens eine insbesondere sich bzgl. der Achse, insbesondere Montageachse, radial nach innen oder bevorzugt außen wirkende Dichtfläche auf, die insbesondere an wenigstens einer sich radial erstreckenden Dichtlippe und/oder wenigstens einem Dichtungsring, insbesondere einem O-Ring, ausgebildet ist. Eine Dichtlippe oder ein Dichtungsring kann beim Zusammenführen des Gehäuses und dem Verbindungsteil und/oder der Anschlusseinrichtung axial zur Achse, insbesondere Montageachse, einfach an dem wenigstens einen entsprechenden verbindungsseitigen Fluidauslass-Dichtungsteil entlanggleiten.

Vorteilhafterweise kann wenigstens ein gehäuseseitiges Fluidauslass-Dichtungsteil und wenigstens ein verbindungsseitiges Fluidauslass-Dichtungsteil koaxial zu einer Achse, insbesondere zur Achse, insbesondere Montageachse, sein. Auf diese Weise können die entsprechenden Fluidauslass-Dichtungsteile einfacher ineinander geführt werden. Die Fluidauslass-Dichtungsteile können dabei einfach aneinander entlanggleiten.

Vorteilhafterweise kann das wenigstens eine verbindungsseitige Fluidauslass-Dichtungsteil wenigstens eine Dichtungsfläche aufweisen. Vorteilhafterweise kann die wenigstens eine Dichtungsfläche zylindrisch und/oder konisch sein. Vorteilhafterweise kann eine Achse der wenigstens einen zylindrisch/konischen Dichtungsfläche parallel oder koaxial zur Achse, insbesondere Montageachse, sein.

Vorteilhafterweise kann wenigstens ein gehäuseseitiges Fluidauslass-Dichtungsteil wenigstens teilweise elastisch sein. Auf diese Weise kann sich das wenigstens eine gehäuseseitige Fluidauslass-Dichtungsteil einfacher an das entsprechende wenigstens eine verbindungsseitige Fluidauslass-Dichtungsteil anschmiegen. Ferner können so einfacher und besser Toleranzen ausgeglichen und/oder Schwingungen gedämpft werden.

Vorteilhafterweise kann wenigstens eine Dichtlippe und/oder wenigstens ein Dichtungsring elastisch sein, insbesondere aus einem elastischen Material sein.

Vorteilhafterweise können wenigstens zwei Dichtlippen vorgesehen sein. Wenigstens zwei Dichtlippen können in Richtung einer Achse, insbesondere der Achse, insbesondere Montageachse, betrachtet hintereinander angeordnet sein. Auf diese Weise kann die Dichtwirkung weiter verbessert werden.

O-Ringe haben den Vorteil, dass sie beim Zusammenbau der entsprechenden Bauteile einfach an einer entsprechenden Dichtungsfläche des verbindungsseitigen Fluidauslass-Dichtungsteils entlang gleiten oder rollen können.

Bei einer weiteren vorteilhaften Ausführungsform kann wenigstens ein gehäuseseitiges Fluidauslass-Dichtungsteil in Verbindung mit wenigstens einem Trägerteil realisiert sein, das einstückig oder mehrstückig mit wenigstens einem Gehäuseabschnitt, insbesondere einem Gehäusedeckel, des Gehäuses verbunden sein kann. Wenigstens ein gehäuseseitiges Fluidauslass-Dichtungsteil kann mit dem wenigstens einen Trägerteil separat vormontiert werden. Die vormontierte Einheit kann einfach in weiteren Herstellungsschritten mit dem wenigstens einen Gehäuse verbunden werden.
Das wenigstens eine Trägerteil kann vorteilhafterweise einstückig oder mehrstückig mit wenigstens einem Gehäuseabschnitt verbunden sein.

Vorteilhafterweise kann das wenigstens eine Trägerteil mittels einer materialschlüssigen und/oder formschlüssigen und/oder kraftschlüssigen Verbindung, insbesondere einer Klebeverbindung, Schweißverbindung, Klemmverbindung, Rastverbindung, Klipsverbindung, Schraubverbindung, Steckverbindung und/oder einer bajonettartigen Verbindung oder dergleichen, mit dem wenigstens einen Gehäuseabschnitt verbunden sein.

Vorteilhafterweise kann das wenigstens eine Trägerteil mittels wenigstens eines insbesondere lösbaren Fixierelements mit dem wenigstens einen Gehäuseabschnitt verbunden sein. Das wenigstens eine Fixierelement kann vorteilhafterweise wenigstens ein Rastelement, insbesondere einen Rastarm, aufweisen. Der wenigstens eine Rastarm kann wenigstens eine Rastnase aufweisen. Die Rastnase kann aufseiten des Gehäuseabschnitts verrastet oder verklipst werden.

Wenigstens ein Rastarm kann vorteilhafterweise in wenigstens einem Durchlass, insbesondere einem Gasdurchlass, auf der Gehäuseseite verrastet oder verklipst werden. Der wenigstens eine Rastarm kann vorteilhafterweise durch den wenigstens einen Durchlass hindurchführen.

Vorteilhafterweise kann das wenigstens eine Trägerteil mit einem Gehäusedeckel des Gehäuses verbunden werden.

Vorteilhafterweise kann das wenigstens eine Trägerteil wenigstens ein gehäuseseitiges Fluidauslass-Dichtungsteil oder eine Aufnahme für wenigstens ein gehäuseseitiges Fluidauslass-Dichtungsteil aufweisen.

Vorteilhafterweise kann das wenigstens eine Trägerteil wenigstens eine Dichtlippe und/ oder eine Dichtungsnut für einen Dichtungsring aufweisen.

Vorteilhafterweise kann wenigstens ein gehäuseseitiges Fluidauslass-Dichtungsteil einstückig oder mehrstückig an dem wenigstens einen Trägerteil realisiert sein. Vorteilhafterweise kann das wenigstens eine Trägerteil mit wenigstens einem gehäuseseitigen Fluidauslass-Dichtungsteil als Zweikomponentenbauteil realisiert sein.

Bei einer weiteren vorteilhaften Ausführungsform kann das Trägerteil einen ersten, insbesondere zylinderförmigen Abschnitt aufweisen, der von dem Gehäuseabschnitt axial nach außen ragt. Dabei ist das gehäuseseitige Fluidauslass-Dichtungsteil bevorzugt so am Trägerteil, insbesondere dessen axialen Ende, angeordnet, dass es von diesem weg insbesondere ringförmig nach radial innen oder außen ragt.

Das wenigstens eine Trägerteil kann im Vergleich zu wenigstens einem gehäuseseitigen Fluidauslass-Dichtungsteil starr und/oder formstabil sein. Auf diese Weise kann das wenigstens eine Trägerteil entsprechende Haltekräfte und/oder Dichtungskräfte, welche auf das wenigstens eine gehäuseseitige Fluidauslass-Dichtungsteil wirken können, aufnehmen und/oder weiterleiten.

Das wenigstens eine Trägerteil kann vorteilhafterweise ringförmig sein. Es kann vorteilhafterweise die Achse, insbesondere Montageachse, umfangsmäßig umgeben. Das wenigstens eine Trägerteil kann vorteilhafterweise koaxial zur Achse, insbesondere Montageachse, sein.

Bei einer weiteren vorteilhaften Ausführungsform kann wenigstens zwischen wenigstens einem zweiten Gasdurchlass und einer Umgebung wenigstens ein gehäuseseitiges Umgebungsdichtungsteil wenigstens einer Umgebungsdichteinrichtung angeordnet sein, das mit wenigstens einem entsprechenden insbesondere anschlussseitigen und/ oder verbindungsseitigen Umgebungsdichtungsteil der Anschlusseinrichtung und/oder des Verbindungsteils dichtend zusammenwirken kann. Mit der Umgebungsdichteinrichtung kann der wenigstens eine zweite Gasdurchlass zur Umgebung hin abgedichtet werden.

Als Umgebung wird der das Gehäuse in seiner Montageposition an der Anschlusseinrichtung umgebende Raum betrachtet.

Der wenigstens eine zweite Gasdurchlass kann bzgl. der Achse, insbesondere Montageachse,-radial relativ weit außen liegen. Insbesondere kann er bzgl. der Achse, insbesondere Montageachse, weiter außen als der wenigstens eine Fluidauslass und/oder der wenigstens eine erste Gasdurchlass angeordnet sein.

Vorteilhafterweise kann das gehäuseseitige Umgebungsdichtungsteil wenigstens eine Dichtung und/oder wenigstens eine Dichtfläche aufweisen. Entsprechend kann das wenigstens eine insbesondere anschlussseitige und/oder verbindungsseitige Umgebungsdichtungsteil wenigstens eine Dichtungsfläche und/oder wenigstens eine Dichtung aufweisen.

Vorteilhafterweise kann das wenigstens eine gehäuseseitige Umgebungsdichtungsteil mit dem wenigstens einen insbesondere anschlussseitigen Umgebungsdichtungsteil wenigstens axial dichtend zusammenwirken. Auf diese Weise kann eine Haltekraft des Gehäuses an der Anschlusseinrichtung und/oder dem Verbindungsteil, welche parallel zur Achse, insbesondere Montageachse, gerichtet ist, die Umgebungsdichtungsteile stärker zusammenpressen. So kann eine Dichtwirkung verbessert werden.

Vorteilhafterweise können wenigstens ein gehäuseseitiges Umgebungsdichtungsteil und wenigstens ein gehäuseseitiges Fluidauslass-Dichtungsteil an der gleichen Stirnseite des Gehäuses, insbesondere dem Gehäusedeckel, angeordnet sein.

Vorteilhafterweise kann wenigstens ein gehäuseseitiges Umgebungsdichtungsteil wenigstens ein gehäuseseitiges Fluidauslass-Dichtungsteil bzgl. der Achse, insbesondere Montageachse, wenigstens teilumfänglich umgeben. Auf diese Weise können auch der wenigstens eine erste Gasdurchlass und der wenigstens eine Fluidauslass zur Umgebung hin abgedichtet werden.

Die wenigstens eine Umgebungsdichtungseinrichtung kann auch als äußere Dichteinrichtung und die entsprechenden Dichtungsteile als äußere Dichtungsteile bezeichnet werden. Entsprechend können die wenigstens eine Fluidauslass-Dichteinrichtung als innere Dichteinrichtung und deren Dichtungsteile als innere Dichtungsteile bezeichnet werden.

Vorteilhafterweise kann die Kombination der wenigstens einen wenigstens radial wirkenden Fluidauslass-Dichteinrichtung und der wenigstens einen wenigstens axial wirkenden Umgebungsdichteinrichtung größere Maßtoleranzen bei der Einrichtung zur Abscheidung wenigstens eines Fluids insbesondere dem Gehäuse, und/oder der Anschlusseinrichtung erlauben.

Bei einer weiteren vorteilhaften Ausführungsform kann wenigstens ein erster Gasdurchlass eine Montageöffnung für wenigstens ein Verbindungsteil, insbesondere einen Nippel oder einen Rohrstutzen, aufweisen und wenigstens ein Fluidauslass kann wenigstens eine Durchlassöffnung aufweisen, die materialtechnisch von der wenigstens eine Montageöffnung getrennt ist.

In die Montageöffnung kann das wenigstens eine Verbindungsteil eingeführt werden. Das wenigstens eine Verbindungsteil kann durch die Montageöffnung hindurchführen und in einen Innenraum des Gehäuses führen.

Vorteilhafterweise kann eine Achse des wenigstens einen Verbindungsteils bei montiertem Gehäuse axial, insbesondere koaxial, zur Achse, insbesondere Montageachse, verlaufen. Zur Montage kann das wenigstens eine Verbindungsteil so axial zur Achse, insbesondere Montageachse, durch die Montageöffnung geführt werden.

Das wenigstens eine Verbindungsteil kann vorteilhafterweise mittels einer Dreh- und/oder Steckverbindung, insbesondere einer Schraubverbindung, mit der Montageöffnung verbunden sein.

Vorteilhafterweise kann eine radial äußere Umfangsseite des wenigstens einen Verbindungsteils ein Außengewinde aufweisen, welches zur Verbindung mit dem Gehäuse mit einem entsprechenden Innengewinde im Bereich der Montageöffnung verschraubt werden kann.

Vorteilhafterweise kann wenigstens ein Fluidauslass wenigstens eine Durchlassöffnung aufweisen, die materialtechnisch von der wenigstens einen Montageöffnung getrennt ist. Vorteilhafterweise kann wenigstens ein Fluidauslass bzgl. der Achse, insbesondere Montageachse, zu der wenigstens einen Montageöffnung radial beabstandet sein. Zwischen der wenigstens einen Montageöffnung und dem wenigstens einen Fluidauslass kann sich wenigstens ein Materialabschnitt, insbesondere ein Materialsteg, des Gehäuses, insbesondere des Gehäusedeckels, befinden. Der Materialabschnitt kann die Montageöffnung von dem Fluidauslass trennen. Insbesondere bei Verwendung einer Schraubverbindung zwischen dem Verbindungsteil und dem Gehäuse kann so das Innengewinde im Bereich der Achse, insbesondere Montageachse, umfangsmäßig gleichmäßig und geschlossen mit dem Außengewinde des Verbindungsteils zusammenwirken.

Bei einer weiteren vorteilhaften Ausführungsform können wenigstens ein Gasdurchlass und/oder wenigstens ein Fluidauslass und/oder wenigstens ein gehäuseseitiges Fluidauslass-Dichtungsteil und/oder wenigstens ein gehäuseseitiger Umgebungsdichtungsteil in/an/mit einem Gehäusedeckel eines insbesondere becherförmigen Gehäuses realisiert sein. Auf diese Weise können die genannten Bauteile einfach an dem Gehäusedeckel realisiert werden. Der Gehäusedeckel kann unabhängig von dem restlichen Gehäuse, insbesondere dem Gehäusetopf, realisiert und/oder vormontiert werden.

Beim Zusammenbau der Einrichtung zur Abscheidung des Fluids kann einfach ein entsprechendes Abscheide- und/oder Filterelement in das Gehäuse eingebracht werden. Anschließend kann das Gehäuse mit dem Gehäusedeckel verschlossen werden.

Das vormontierte Gehäuse kann einfach mit dem Verbindungsteil ausgestattet werden. Alternativ kann die Anschlusseinrichtung mit dem Verbindungsteil ausgestattet werden. Anschließend können das Gehäuse und die Anschlusseinrichtung verbunden werden. Dabei wird das Verbindungsteil entsprechend mit dem jeweils anderen Bauteil verbunden. Beim Verbinden können automatisch die Gasdurchlässe und der wenigstens eine Fluidauslass mit entsprechenden Gaskanälen und Fluidkanälen des Verbindungsteils und/oder der Anschlusseinrichtung in Verbindung gebracht werden. Ebenso können je nach Montagemethode die Fluidauslass-Dichteinrichtung und gegebenenfalls die Umgebungsdichteinrichtung im selben Montageschritte oder in unterschiedlichen Montageschritten jeweils automatisch aktiviert werden.

Am Gehäusedeckel ist zwischen dem wenigstens einen zweiten Gasdurchlass und dem wenigstens einen Fluidauslass wenigstens ein gehäuseseitiges Fluidauslass-Dichtungsteil wenigstens einer Fluidauslass-Dichteinrichtung angeordnet, das mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirken kann.

Das Verbindungsteil ist derart ausgestaltet, dass es wenigstens einen Fluiddurchlass aufweist oder zumindest mit bildet für wenigstens einem Fluidauslass des Gehäuses für von dem Gas abgeschiedenes Fluid, der außerhalb des wenigstens einen gasleitenden Raums angeordnet ist, und auf einer dem gasleitenden Raum abgewandten Seite des wenigstens einen Fluidauslasses wenigstens ein verbindungsseitiges Fluidauslass-Dichtungsteil wenigstens einer Fluidauslass-Dichteinrichtung angeordnet ist, das mit wenigstens einem entsprechenden gehäuseseitigen Fluidauslass-Dichtungsteil dichtend zusammenwirken kann.

Das Verbindungsteil umfasst wenigstens ein verbindungsseitiges Fluidauslass-Dichtungsteil, insbesondere wenigstens eine Dichtfläche und/oder eine Dichtungsaufnahme, besondere Dichtungsnut, für wenigstens eine Dichtung und/oder wenigstens eine Dichtung, wenigstens einer Fluidauslass-Dichteinrichtung, die mit wenigstens einem gehäuseseitigen Fluidauslass-Dichtungsteil der wenigstens einen Fluidauslass-Dichteinrichtung dichtend zusammenwirken kann.

Vorteilhafterweise kann das wenigstens eine verbindungsseitige Fluidauslass-Dichtungsteil wenigstens eine bzgl. der Achse, insbesondere Montageachse, wenigstens radial gerichtete, insbesondere umfangsmäßig und axial verlaufende, Dichtfläche aufweisen. Vorteilhafterweise kann die wenigstens einen Dichtfläche die Form eines Zylindermantels, insbesondere Kreiszylindermantels, aufweisen.

Schließlich wird die Aufgabe erfindungsgemäß mit der Einrichtung zur Abscheidung eines Fluids nach Anspruch 8 gelöst. Zwischen dem wenigstens einen zweiten Gasdurchlass und dem wenigstens einen Fluidauslass ist wenigstens ein gehäuseseitiges Fluidauslass-Dichtungsteil wenigstens einer Fluidauslass-Dichteinrichtung angeordnet, das mit wenigstens einem entsprechenden verbindungsseitigen Fluidauslass-Dichtungsteil eines Verbindungsteils, das zur Verbindung des Gehäuses mit der Anschlusseinrichtung vorgesehen ist, dichtend zusammenwirkt.

Im Übrigen gelten die im Zusammenhang mit dem erfindungsgemäßen Gehäuse, dem erfindungsgemäßen Gehäusedeckel, dem erfindungsgemäßen Verbindungsteil und der erfindungsgemäßen Einrichtung und deren jeweiligen vorteilhaften Ausgestaltungen aufgezeigten Merkmale und Vorteile untereinander entsprechend und umgekehrt. Die einzelnen Merkmale und Vorteile können selbstverständlich untereinander kombiniert werden, wobei sich weitere vorteilhafte Wirkungen einstellen können, die über die Summe der Einzelwirkungen hinausgehen.

### Kurze Beschreibung der Zeichnungen

Weitere Vorteile, Merkmale und Einzelheiten der Erfindung ergeben sich aus der nachfolgenden Beschreibung, in der Ausführungsbeispiele der Erfindung anhand der Zeichnung näher erläutert werden. Der Fachmann wird die in der Zeichnung, der Beschreibung und den Ansprüchen in Kombination offenbarten Merkmale zweckmäßigerweise auch einzeln betrachten und zu sinnvollen weiteren Kombinationen zusammenfassen. Es zeigen schematisch:
- Figur 1: einen Längsschnitt einer Luftentölvorrichtung mit einem Luftentölelement gemäß einem ersten Ausführungsbeispiel, mit einem Gehäuse, das einen Gehäusedeckel mit einem Trägerring und einer Ölablass-Dichtung und einen Verbindungsnippel aufweist zur Verbindung mit einem Anschlusskopf;
- Figur 2: eine Detailansicht der Luftentölvorrichtung aus der Figur 1 im Bereich des Gehäusedeckels;
- Figur 3: eine isometrische Darstellung des Gehäusedeckels aus den Figuren 1 und 2 mit Blick auf die Innenseite des Gehäusedeckels;
- Figur 4: den Gehäusedeckel aus den Figuren 1 bis 3 mit Blick auf dessen Außenseite;
- Figur 5: einen Längsschnitt des Gehäusedeckels aus den Figuren 1 bis 4;
- Figur 6: eine Draufsicht auf die Innenseite des Gehäusedeckels aus den Figuren 1 bis 5;
- Figur 7: eine Draufsicht auf die Außenseite des Gehäusedeckels aus den Figuren 1 bis 6;
- Figur 8: eine Draufsicht auf die Außenseite des Gehäusedeckels aus den Figuren 1 bis 7 ohne Trägerring und Ölablass-Dichtung;
- Figur 9: einen Teilschnitt in Querrichtung einer Luftentölvorrichtung gemäß einem zweiten Ausführungsbeispiel, welche ähnlich ist zu der Luftentölvorrichtung aus den Figuren 1 bis 8, mit Betrachtungsrichtung von dem Anschlusskopf zum Gehäusedeckel;
- Figur 10: den Teilschnitt der Luftentölvorrichtung aus Figur 9 ohne Verbindungsnippel, Trägerring und Ölablass-Dichtung;
- Figur 11: einen Längsschnitt der Luftentölvorrichtung aus Figur 9 entlang der dortigen Schnittlinie XI-XI;
- Figur 12: eine Detailansicht des Längsschnitts aus Figur 11 im Bereich des Gehäusedeckels;
- Figur 13: einen Längsschnitt der Luftentölvorrichtung aus Figur 10 entlang der dortigen Schnittlinie XIII-XIII;
- Figur 14: einen Längsschnitt einer Luftentölvorrichtung gemäß einem dritten Ausführungsbeispiel, bei dem die Ölablass-Dichtung eine O-Ring Dichtung aufweist.

In den Figuren sind gleiche Bauteile mit gleichen Bezugszeichen versehen.

### Ausführungsform(en) der Erfindung

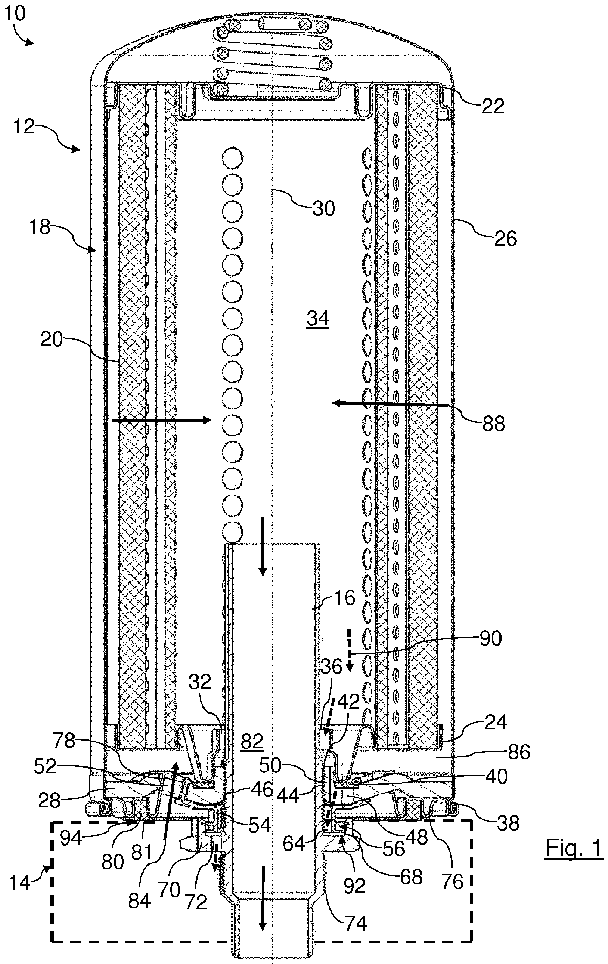

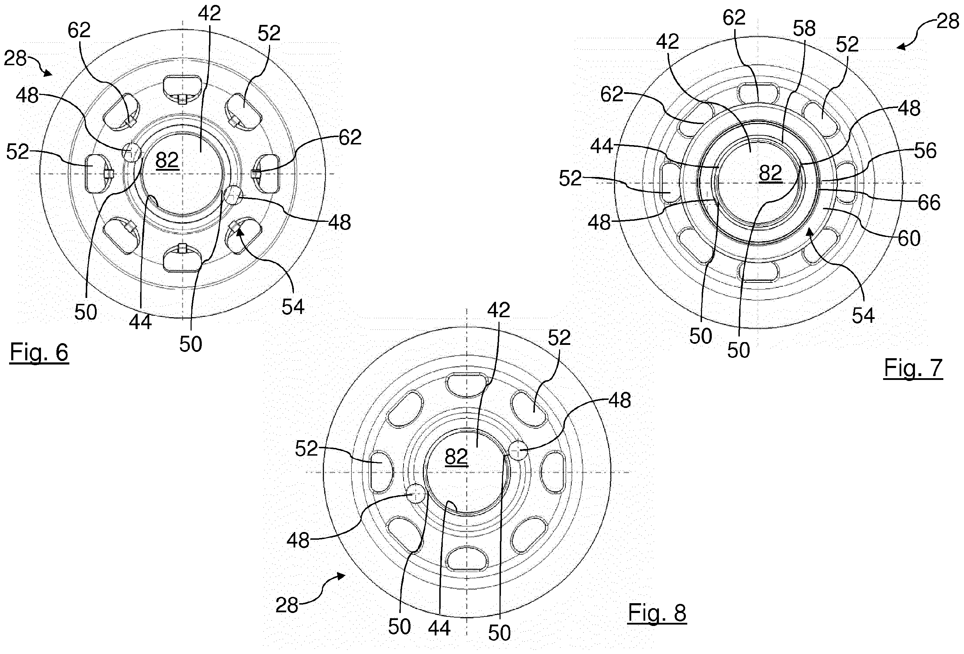

In den Figuren 1 bis 8 ist eine Luftentölvorrichtung 10 in unterschiedlichen Darstellungen, Schnitten und Detailansichten gezeigt. Die Luftentölvorrichtung 10 dient zur Abscheidung von etwa in Luft mitgetragenem Öl von der Luft. Die Luftentölvorrichtung 10 findet beispielsweise Einsatz bei Kompressoren, Vakuumpumpen, Druckluftanlagen oder dergleichen. Sie kann vor einem Einlass oder nach einem Auslass eines entsprechenden Gerätes angeordnet sein.

Die Luftentölvorrichtung 10 umfasst ein Luftentölelement 12, das auch als Luftentölbox bezeichnet werden kann. Das Luftentölelement 12 ist austauschbar an einem Anschlusskopf 14, in Figur 1 unten, befestigt. Der Anschlusskopf 14 dient als Anschlusseinrichtung für entsprechende Luftleitungen und Ölleitungen zur Verbindung mit dem entsprechenden Gerät. In Figur 1 ist der Anschlusskopf 14 gestrichelt lediglich schematisch angedeutet. Ein hohler, rohrstutzenartiger Verbindungsnippel 16 verbindet das Luftentölelement 12 mit dem Anschlusskopf 14. Der Innenraum des Verbindungsnippels 16 ist gasleitenden, insbesondere luftleitend.

Das Luftentölelement 12 umfasst ein becherförmiges Gehäuse 18. In dem Gehäuse 18 ist beispielhaft ein als ringförmiges Koaleszenzelement ausgebildetes Filterelement 20 angeordnet. Als Filtermedium weist das Filterelement 20 beispielhaft eine Glasfasermatte auf, die mehrfach ringförmig gewickelt und stirnseitig durch eine obere Endscheibe 22 und eine dem Anschlusskopf 14 zugewandte untere Endscheibe 24 begrenzt ist. Als weiteres Filtermedium ist im Inneren der Glasfaserwicklung ein Vlies angeordnet.

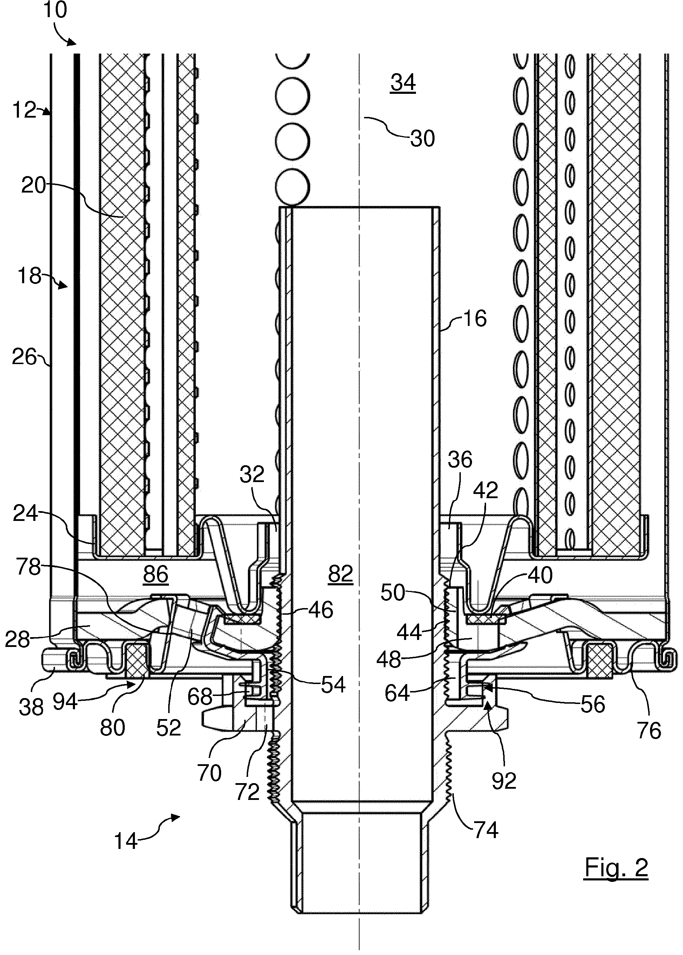

In der Regel ist die Luftentölvorrichtung 10 betriebsbereit in der Orientierung angeordnet, die in den Figuren 1 und 2 gezeigt ist. Sie kann jedoch auch in anderen Orientierungen angeordnet sein. Wenn im Folgenden von "unten", "oben" oder dergleichen die Rede ist, so bezieht sich dies, wenn nicht anders erwähnt, auf die Darstellung in den Figuren 1 und 2.

Das Gehäuse 18 umfasst einen Gehäusetopf 26, dessen dem Anschlusskopf 14 zugewandte Öffnung mit einem Gehäusedeckel 28 verschlossen ist. Der Gehäusetopf 26 und der Gehäusedeckel 28 sind beispielsweise aus Metall. Alternativ kann wenigstens eines der beiden Bauteile aus einem andersartigen Material, beispielsweise Kunststoff, sein oder ein andersartiges Material wenigstens aufweisen.

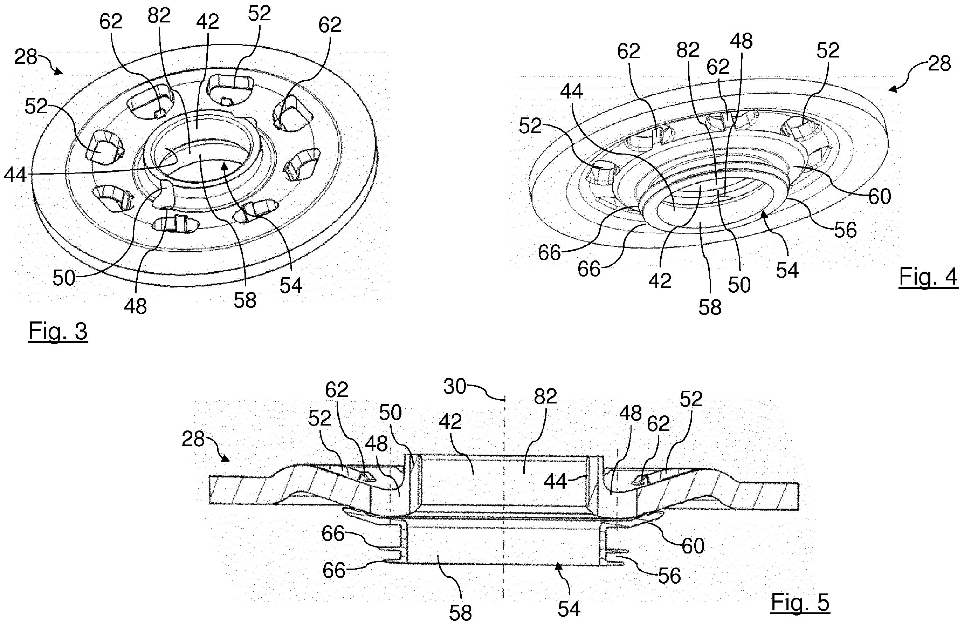

Der Gehäusedeckel 28 ist im Detail in den Figuren 3 bis 8 gezeigt. Das Gehäuse 18, das Filterelement 20 und der Verbindungsnippel 16 sind bei der betriebsbereit montierten Luftentölvorrichtung 10 jeweils koaxial zu einer gedachten Montageachse 30. Um die Montageachse 30 kann das Luftentölelement 12 mittels des Verbindungsnippels 16 auf den Anschlusskopf 14 geschraubt und von diesem abgeschraubt werden.

Wenn im Folgenden von "radial", "axial", "koaxial" oder "umfangsmäßig" oder dergleichen die Rede ist, so bezieht sich dies, falls nicht anders erwähnt, auf die Montageachse 30.

Die dem Gehäusedeckel 28 zugewandte untere Endscheibe 24 ist etwa ringförmig. Sie weist eine koaxiale Durchstecköffnung 32 für den Verbindungsnippel 16 auf. Radial zwischen der Durchstecköffnung 32 und dem Filtermedium des Filterelements 20 ist die untere Endscheibe 24 mehrfach gebogen, so dass sich eine umfangsmäßige Ringmulde ergibt, die zu einem Elementinnenraum 34 des Filterelements 20 hin offen ist.

Der radial innere Rand der unteren Endscheibe 24 umgibt die Durchstecköffnung 32. Er zeigt zu dem Elementinnenraum 34. Ein Innendurchmesser der Durchstecköffnung 32 ist größer als ein Außendurchmesser des Verbindungsnippels 16 dort. Zwischen der radial äußeren Umfangswand des Verbindungsnippels 16 und dem radial inneren Rand der Durchstecköffnung 32 verbleibt ein ringförmiger, koaxialer Durchtrittsspalt 36 für abgeschiedenes Öl.

Der Gehäusedeckel 28 ist mittels eines Halterings 76 an dem Gehäusetopf 26 gehalten, wie weiter unten noch näher erläutert wird. Der Haltering 76 ist mit einer Bördelverbindung 38 mit dem Rand des Gehäusetopfs 26 verbunden.

Die die Ringmulde begrenzende axiale Außenseite der unteren Endscheibe 24 überragt das Filtermedium in axialer Richtung. Ein die Talsohle der Ringmulde bildender Abschnitt der Außenseite der unteren Endscheibe 24 liegt umfangsmäßig zusammenhängend in axialer Richtung an einem Dämpfungsring 40 an. Der Dämpfungsring 40 stützt sich auf der axial gegenüberliegenden Seite an einer Innenseite des Gehäusedeckels 28 ab. Der Dämpfungsring 40 ist koaxial zur Montageachse 30. Er dient unter anderem zur Geräuschdämpfung, als so genannter Klapperschutz. Er schränkt die axiale Beweglichkeit des Filterelements 20 in dem Gehäuse 18 ein und verhindert so, dass Klappergeräusche entstehen. Ferner kann der Dämpfungsring 40 als Toleranzausgleich und/oder zur Dämpfung von betriebsbedingten Vibrationen oder Schwingungen dienen.

Der Gehäusedeckel 28 ist im Wesentlichen kreisrund. Er ist koaxial zur Montageachse 30. Im Profil ist der Gehäusedeckel 28, wie in Figur 4 gezeigt, von radial außen nach radial innen betrachtet etwa S-förmig gebogen.

In seinem Zentrum weist der Gehäusedeckel 28 eine koaxiale Montageöffnung 42 für den Verbindungsnippel 16 auf. Eine radial innere, die Montageöffnung 42 umgebende Umfangswand des Gehäusedeckels 28 ist mit einem Innengewinde 44 ausgestattet. Das Innengewinde 44 passt zu einem entsprechenden Außengewinde 46 an der radial äußeren Umfangsseite des Verbindungsnippels 16.

Radial außerhalb der Montageöffnung 42 weist der Gehäusedeckel 28 zwei jeweils durchgängige Ölablasslöcher 48 auf. Die Ölablasslöcher 48 sind auf bzgl. der Montageachse 30 radial gegenüberliegenden Seiten angeordnet. Ihre Achsen sind parallel zur Montageachse 30. Die Ölablasslöcher 48 sind mittels eines kreiszylindrischen, koaxialen Stegabschnitts 50 materialtechnisch getrennt von der Montageöffnung 42.

Entlang einer gedachten koaxialen Kreislinie, welche die beiden Ölablasslöcher 48 umgibt, ist eine Mehrzahl von durchgängigen Lufteinlasslöchern 52 angeordnet. Die Lufteinlasslöcher 42 sind jeweils an ihren radial äußeren Umfangsseiten abgeflacht. Gedachte Achsen der Lufteinlasslöcher 52 verlaufen parallel zur Montageachse 30.

Auf der dem Filterelement 20 abgewandten Außenseite ist ein koaxialer Trägerring 54 an dem Gehäusedeckel 28 befestigt. Der Trägerring 54 trägt eine Ölablass-Dichtung 56. Der Trägerring 54 ist aus Kunststoff. Er kann statt aus Kunststoff auch aus einem andersartigen Material, beispielsweise Metall, sein oder wenigstens ein andersartiges Material aufweisen.

Der Trägerring 54 weist einen koaxialen hohlhohlzylindrischen Abschnitt 58 auf. Der hohlzylindrische Abschnitt 58 geht an seiner der dem Gehäusedeckel 28 zugewandten Stirnseite einstückig in einen koaxialen Radialringabschnitt 60 über. Der Radialringabschnitt 60 erstreckt sich umfangsmäßig zusammenhängend und von dem hohlzylindrischen Abschnitt 58 etwa radial nach außen. Das Profil des Radialringabschnitts 60 ist an die Außenseite des Gehäusedeckels 28 angepasst.

Im Bereich seines radial äußeren Randes ist eine Mehrzahl von Rastarmen 62 jeweils einstückig mit dem Radialringabschnitt 60 verbunden. Die Rastarme 62 erstrecken sich auf der dem hohlzylindrischen Abschnitt 58 axial gegenüberliegenden Seite jeweils etwa parallel zur Montageachse 30 axial von dem hohlzylindrischen Abschnitt 58 weg. Jeder Rastarm 62 weist an seinem freien Ende eine nach radial innen gerichtete Rastnase auf. Die Rastarme 62 erstrecken sich jeweils durch eines der Lufteinlasslöcher 52 des Gehäusedeckels 28. Sie verrasten mit ihren Rastnasen auf den radial inneren Seiten der Lufteinlasslöcher 52 auf der Innenseite des Gehäusedeckels 28.

Ein Innendurchmesser des hohlzylindrischen Abschnitts 58 und des Radialringabschnitts 60 ist etwas größer als der Innendurchmesser der Montageöffnung 42 insbesondere des Innengewindes 44. Die Ölablasslöcher 48 überragen den Trägerring 54 radial innen, so dass sie mit einem von dem hohlzylindrischen Abschnitt 58 umgebenden Innenraum des Trägerrings 54 verbunden sind.

In dem in den Figuren 1 und 2 gezeigten Montagezustand ist die radial innere Umfangsseite des hohlzylindrischen Abschnitts 58 des Trägerrings 54 zu der radial äußeren Umfangsseite des Verbindungsnippels 16 beabstandet, so dass sich zwischen den entsprechenden Umfangsseiten ein Ringspalt 64 als Durchlass für das abgetrennte Öl ergibt.

Im Bereich des freien Randes des hohlzylindrischen Abschnitts 58, der dem Gehäusedeckel 28 abgewandt ist, sind an der radial äußeren Umfangsseite des hohlzylindrischen Abschnitts 58 zwei Dichtungslippen 66 angeordnet. Die Dichtungslippen 66 sind Teil der Ölablass-Dichtung 56. Die Dichtungslippen 66 erstrecken sich jeweils umfangsmäßig zusammenhängend und von radial innen nach radial außen von dem hohlzylindrischen Abschnitt 58 weg. Die Dichtungslippen 66 verlaufen parallel zueinander. Die dem Gehäusedeckel 28 zugewandte, axial innere Dichtungslippe 66 überragt die andere, axial äußere Dichtungslippe 66 radial außen. Die Dichtungslippen 66 sind elastisch. Beispielsweise können die Dichtungslippen 66 mit dem Trägerring 54 als Zweikomponentenbauteil realisiert sein.

Bei montiertem Luftentölelement 12 liegen die Dichtungslippen 66, wie in den Figuren 1 und 2 gezeigt, mit ihren radial äußeren Rändern an einer radial inneren Umfangsseite einer umfangsmäßigen verbindungsseitigen Dichtfläche 68 radial dichtend an. Die verbindungsseitige Dichtfläche 68 hat die Form eines koaxialen Kreiszylindermantels. Die verbindungsseitige Dichtfläche 68 ist an einem koaxialen hohlzylindrischen Wandabschnitt eines koaxialen Ringkragens 70 des Verbindungsmittels 16 realisiert.

Der Ringkragen 70 ist umfangsmäßig an der radial äußeren Umfangsseite des Verbindungsnippels 16 angeordnet. Der Ringkragen 70 bildet auf der dem Gehäusedeckel 28 axial zugewandten Seite eine zum Gehäusedeckel 28 in offene, im Profil U-förmige Ringnut zur Aufnahme des zylindrischen Abschnitts 58 mit den Dichtungslippen 66 des Trägerrings 54.

Durch eine den Boden des "U" bildende Stirnwand des Ringkragens 70 führt eine verbindungsseitige Öldurchlassöffnung 72. Die verbindungsseitige Öldurchlassöffnung 72 verbindet bei montierter Luftentölvorrichtung 10 den Ringspalt 64 mit einem in den Figuren 1 und 2 nicht gezeigten Ölablasskanal des Anschlusskopfs 14.

Auf der dem Außengewinde 46 axial gegenüberliegenden Seite des Ringkragens 70 weist der Verbindungsnippel 16 an seiner radial äußeren Umfangsseite ein Anschluss-Außengewinde 74 auf, mit dem der Verbindungsnippel 16 in ein entsprechendes anschlussseitiges Innengewinde des Anschlusskopfs 14, welches in den Figuren 1 und 2 ebenfalls nicht gezeigt ist, eingeschraubt ist.

Der Haltering 76, der beispielsweise aus Blech in radialer Richtung mehrfach gebogen ist, ist mit der Bördelverbindung 38 radial außen mit dem Gehäusetopf 26 verbunden. Der Haltering 76 hält den Gehäusedeckel 28 an dessen Außenseite. An seinem radial inneren Rand verfügt der Haltering 76 über Haltelaschen 78, welche jeweils durch eines der Lufteinlasslöcher 52 des Gehäusedeckels 28 ragen und auf dessen Innenseite umgebogen sind. Mit den Haltelaschen 78 wird der Gehäusedeckel 28 an dem Haltering 76 gehalten.

Ferner umfasst der Haltering 76 radial innerhalb der Bördelverbindung 38 eine koaxiale ringförmige, umfangsmäßig zusammenhängende Dichtungsnut, in der eine koaxiale Umgebungsringdichtung 80 angeordnet ist. Die Umgebungsringdichtung 80 umgibt die Lufteinlasslöcher 52 radial außen. Die Umgebungsringdichtung 80 liegt bei montiertem Luftentölelement 12 axial dichtend an einer entsprechenden, in der Figur 1 gezeigten, anschlussseitigen ringförmigen koaxialen Umgebungsdichtfläche 81 des Anschlusskopfs 14 an. Die Umgebungsdichtfläche 81 erstreckt sich umfangsmäßig und radial. Sie dichtet die Lufteinlasslöcher 52, also die Rohluftseite, zur Umgebung hin ab.

Die Montageöffnung 42 des Gehäusedeckels 28 definiert ferner eine Luftauslassöffnung 82. Durch die Luftauslassöffnung 82 erstreckt sich der Innenraum des Verbindungsnippels 16, der somit in montiertem Zustand den Verlauf der Luftauslassöffnung 82 mit definiert. Der Innenraum des Verbindungsnippels 16 bildet oder begrenzt sozusagen den effektiven Durchströmquerschnitt der Luftauslassöffnung 82.

Beim Betrieb der Luftentölvorrichtung 10 strömt Luft, die mit Öltröpfchen beladen sein kann, von einer Lufteinlassleitung des Anschlusskopfs 14 durch die Lufteinlasslöcher 52, in der Figur 1 angedeutet durch einen Pfeil 84, in einen Einlassraum 86 des Gehäuses 18. Der untere Teil des Einlassraums 86 befindet sich im Gehäuse 18 zwischen der unteren Endscheibe 24 und dem Gehäusedeckel 28 und erstreckt sich umfangsmäßig radial außen um das Filterelement 20.

Die Luft durchströmt das Filtermedium des Filterelements 20 von radial außen nach radial innen, angedeutet durch Pfeile 88. Die Öltröpfchen setzen sich an der radial inneren Umfangsseite des Filterelements 20 ab und fließen der Schwerkraft folgend, in der Figur 1 angedeutet durch gestrichelte Pfeile 90, nach unten.

Die von Öltröpfchen befreite Luft strömt reinluftseitig durch die zentrale Luftauslassöffnung 82 im Innenraum des Verbindungsnippels 16 aus dem Luftentölelement 12 heraus und gelangt in einen, in den Figuren 1 und 2 nicht gezeigten Luftauslasskanal des Anschlusskopfs 14.

Die abgeschiedenen Öltröpfchen gelangen durch den Durchtrittsspalt 36 und die Ölablasslöcher 48 des Gehäusedeckels 28 in den Ringspalt 64. Aus dem Ringspalt 64 gelangt das Öl durch die verbindungsseitige Öldurchlassöffnung 72 in den Ölablasskanal des Anschlusskopfs 14.

Die Ölablass-Dichtung 56 und die verbindungsseitige Dichtfläche 68 bilden eine Ölauslass-Dichteinrichtung 92, welche den Ölauslass mit dem ölführenden Ringspalt 64 und den Ölablasslöcher 48 von der Rohluftseite, insbesondere dem Lufteinlass mit den Lufteinlasslöchern 52, trennt.

Die Montage der Luftentölvorrichtung 10 kann in unterschiedlicher Weise erfolgen.

Nach einer ersten beispielhaften Methode kann der Verbindungsnippel 16 zunächst in die Montageöffnung 42 des Gehäusedeckels 28 eingeschraubt werden. Dabei gleiten die Dichtungslippen 66 innen an der verbindungsseitigen Dichtfläche 68 entlang, bis sie ihre Endposition erreicht haben. Auf die Dichtlippen 66 wirken im Wesentlichen keine axialen Kräfte. Das Luftentölelement 12 kann auf diese Weise mit dem Verbindungsnippel 16 vormontiert werden. Anschließend kann das Luftentölelement 12 mit dem freien Ende des Verbindungsnippels 16 voran axial in das entsprechende Innengewinde des Anschlusskopfs 14 geschraubt werden. Die Umgebungsringdichtung 80 wird axial zwischen dem Gehäusedeckel 28 und der anschlussseitigen Umgebungsringdichtfläche 81 eingepresst. Die Umgebungsringdichtung 80 bildet mit der Umgebungsringdichtfläche 81 eine Umgebungsdichteinrichtung 94.

Nach einer zweiten beispielhaften Methode kann der Verbindungsnippel 16 zunächst in das entsprechende Innengewinde des Anschlusskopfs 14 geschraubt werden. Anschließend kann das Luftentölelement 12 mit dem Gehäusedeckel 28 voran koaxial zur Montageachse 30 zunächst auf den Verbindungsnippel 16 geschraubt werden. Dabei werden automatisch die Ölauslass-Dichteinrichtung 92 und die Umgebungsdichteinrichtung 94 jeweils aktiviert.

Zum Entfernen wird das Luftentölelement 12 entweder von dem Verbindungsnippel 16 bzgl. der Montageachse 30 abgeschraubt oder das Luftfilterelement 12 wird mit dem Verbindungsnippel 16 zusammen vom Anschlusskopfs 14 abgeschraubt.

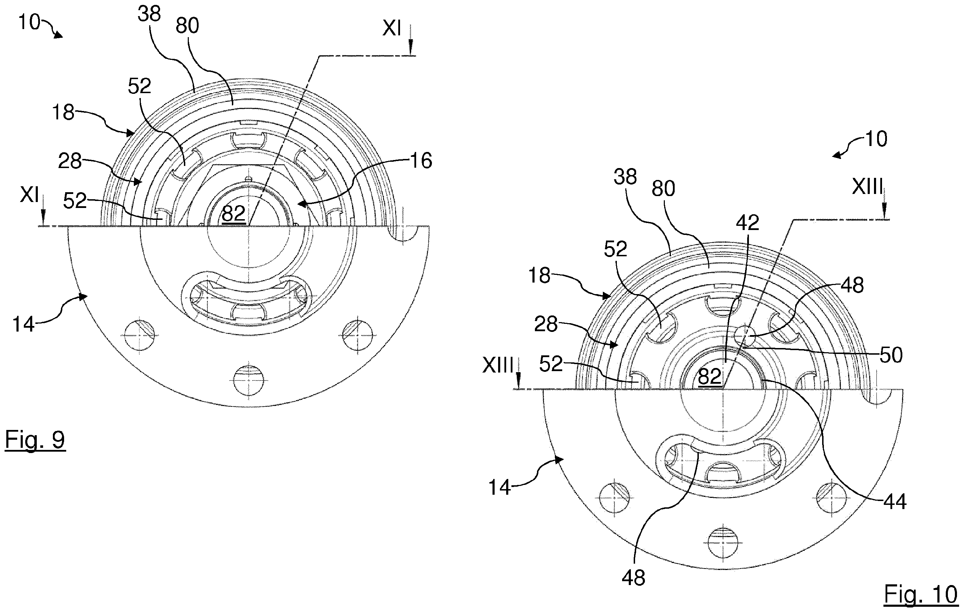

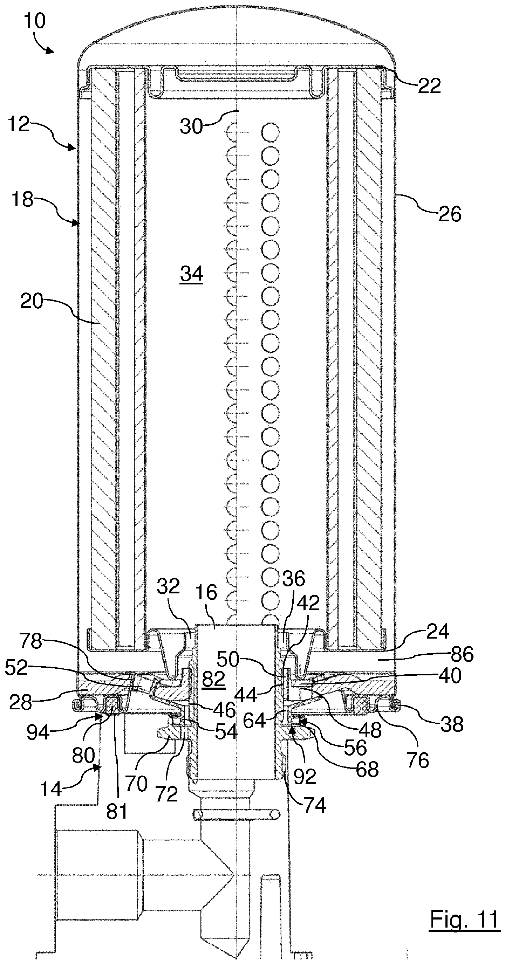

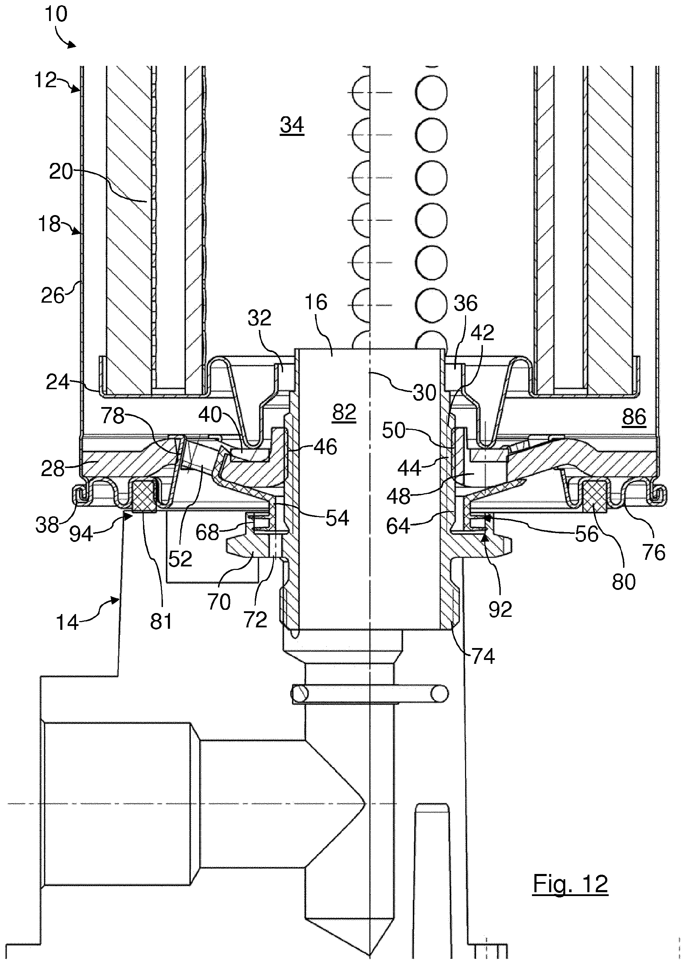

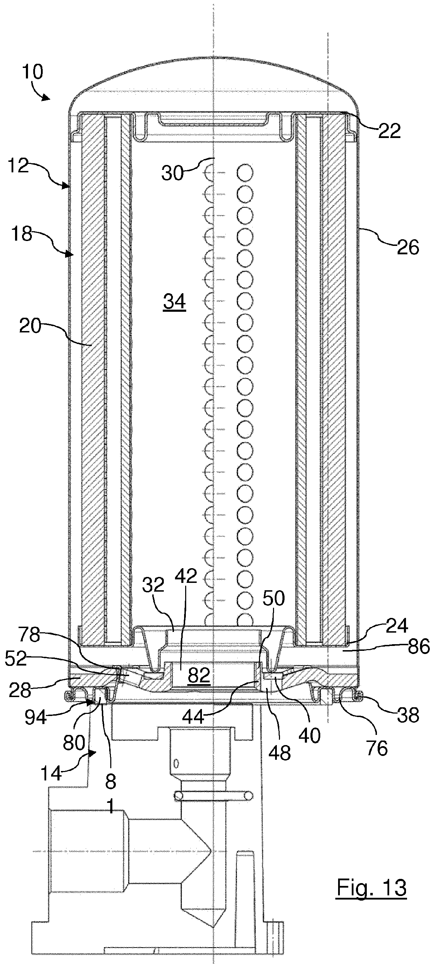

In den Figuren 9 bis 13 ist ein zweites Ausführungsbeispiel einer Luftentölvorrichtung 10 in unterschiedlichen Darstellungen gezeigt. Beim zweiten Ausführungsbeispiel ist eine axiale Ausdehnung des Verbindungsnippels 16 im Elementinnenraum 34 geringer als beim ersten Ausführungsbeispiel aus den Figuren 1 bis 8. Ferner ist der Anschlusskopf 14 beim zweiten Ausführungsbeispiel detaillierter dargestellt.

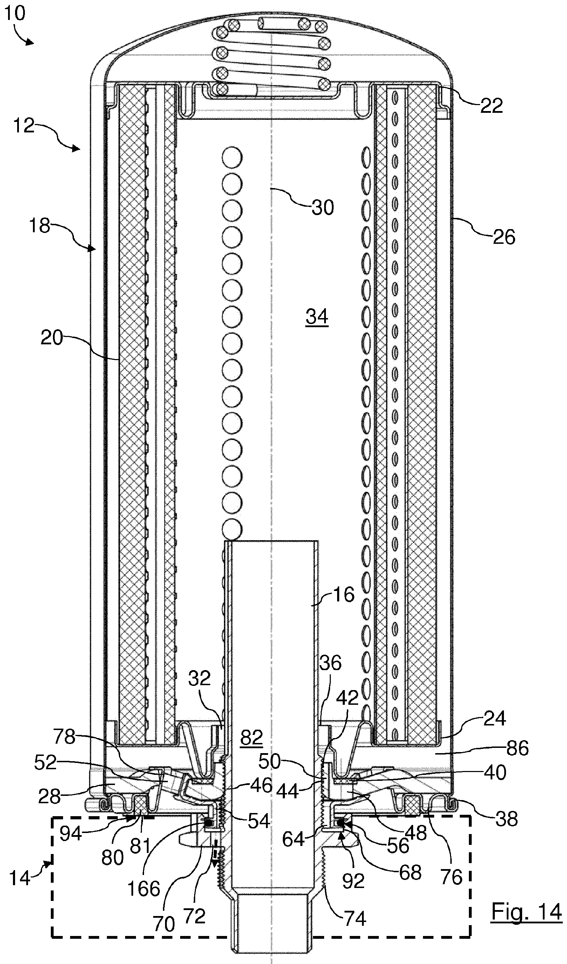

In der Figur 14 ist ein drittes Ausführungsbeispiel einer Luftentölvorrichtung 10 gezeigt. Im Unterschied zum ersten Ausführungsbeispiel weist beim zweiten Ausführungsbeispiel die Ölablass-Dichtung 56 statt der Dichtungslippen eine O-Ringdichtung 166 auf. Die O-Ringdichtung 166 ist in einer entsprechenden Dichtungsnut an der radial äußeren Umfangsseite des hohlzylindrischen Abschnitts 58 des Trägerrings 54 angeordnet. Die O-Ringdichtung 166 dichtet analog zu den Dichtlippen 66 aus den ersten beiden Ausführungsbeispielen gegen die verbindungsseitige Dichtfläche 68 in radialer Richtung ab.

## Patentansprüche

1. Gehäuse (18) einer Einrichtung (12) zur Abscheidung wenigstens eines Fluids, insbesondere Öl, aus Gas, insbesondere Luft, insbesondere einer Luftentölbox oder eines Luftentölelements, insbesondere eines Kompressors, einer Druckluftanlage oder einer Vakuumpumpe, zur Verbindung mit einem Verbindungsteil einer Anschlusseinrichtung, wobei in dem Gehäuse (18) ein Filter- oder Abscheideelement (20) angeordnet ist und das Gehäuse (18) mit einem Gehäusedeckel (28) verschlossen ist, der mit dem Verbindungsteil mittels einer Schraubverbindung verbindbar ist, und der Deckel mit wenigstens einem ersten Gasdurchlass (82), der bzgl. einer Achse (30), insbesondere einer Montageachse des Gehäuses (18) an der Anschlusseinrichtung (14), zentral, insbesondere koaxial, angeordnet ist und mit wenigstens einem zweiten Gasdurchlass (52), der bzgl. der Achse (30) radial außerhalb des wenigstens einen ersten Gasdurchlasses (82) angeordnet ist, ausgestattet ist, **gekennzeichnet durch** wenigstens einen Fluidauslass (36, 48, 64) im Gehäusedeckel (28) für von dem Gas abgeschiedenes Fluid, der bzgl. der Achse (30) radial zwischen dem wenigstens einen ersten Gasdurchlass (82) und dem wenigstens einen zweiten Gasdurchlass (52) angeordnet ist, wobei zwischen dem wenigstens einen zweiten Gasdurchlass (52) und dem wenigstens einen Fluidauslass (36, 48, 64) wenigstens ein gehäuseseitiges Fluidauslass-Dichtungsteil (66; 166) wenigstens einer Fluidauslass-Dichteinrichtung (92) angeordnet ist, das mit wenigstens einem entsprechenden verbindungsseitigen Fluidauslass-Dichtungsteil (68) eines Verbindungsteils (16), das zur Verbindung des Gehäuses (18) mit der Anschlusseinrichtung (14) vorgesehen ist, dichtend zusammenwirken kann und eine nach radial innen oder außen wirkende Dichtfläche aufweist.

2. Gehäuse nach Anspruch 1, **dadurch gekennzeichnet, dass** wenigstens ein gehäuseseitiges Fluidauslass-Dichtungsteil (66; 166) wenigstens eine insbesondere sich bzgl. der Achse (30), insbesondere Montageachse, radial erstreckende Dichtlippe (66) und/oder wenigstens einen Dichtungsring, insbesondere einen O-Ring (166), aufweist.

3. Gehäuse nach einem der vorigen Ansprüche, **dadurch gekennzeichnet, dass** wenigstens ein gehäuseseitiges Fluidauslass-Dichtungsteil (66; 166) in Verbindung mit wenigstens einem Trägerteil (54) realisiert ist, das einstückig oder mehrstückig mit wenigstens einem Gehäuseabschnitt, insbesondere einem Gehäusedeckel (28), des Gehäuses (18) verbunden ist.

4. Gehäuse nach Anspruch 3, **dadurch gekennzeichnet, dass** das Trägerteil einen ersten, insbesondere zylinderförmigen Abschnitt aufweist, der von dem Gehäuseabschnitt axial nach außen ragt und das gehäuseseitige Fluidauslass-Dichtungsteil (66; 166) insbesondere am axialen Ende des Trägerteils von diesem weg nach radial innen oder außen ragt.

5. Gehäuse nach einem der vorigen Ansprüche, **dadurch gekennzeichnet, dass** wenigstens zwischen wenigstens einem zweiten Gasdurchlass (52) und einer Umgebung wenigstens ein gehäuseseitiges Umgebungsdichtungsteil (80) wenigstens einer Umgebungsdichteinrichtung (94) angeordnet ist, das mit wenigstens einem entsprechenden insbesondere anschlussseitigen und/oder verbindungsseitigen Umgebungsdichtungsteil (81) der Anschlusseinrichtung (14) und/oder des Verbindungsteils dichtend zusammenwirken kann.

6. Gehäuse nach einem der vorigen Ansprüche, **dadurch gekennzeichnet, dass** wenigstens ein erster Gasdurchlass (82) eine Montageöffnung (42) für wenigstens ein Verbindungsteil (16), insbesondere einen Nippel oder einen Rohrstutzen, aufweist und wenigstens ein Fluidauslass (36, 48, 64) wenigstens eine Durchlassöffnung (48) aufweist, die materialtechnisch von der wenigstens eine Montageöffnung (42) getrennt ist.

7. Gehäuse nach einem der vorigen Ansprüche, **dadurch gekennzeichnet, dass** wenigstens ein Gasdurchlass (82) und/oder wenigstens ein Fluidauslass (36, 48, 64) und/oder wenigstens ein gehäuseseitiges Fluidauslass-Dichtungsteil (66; 166) und/ oder wenigstens ein gehäuseseitiges Umgebungsdichtungsteil (80) in/an/mit einem Gehäusedeckel (28) eines insbesondere becherförmigen Gehäuses (18) realisiert ist.

8. Einrichtung (12) zur Abscheidung wenigstens eines Fluids, insbesondere Öl, aus Gas, insbesondere Luft, insbesondere eine Luftentölbox oder ein Luftentölelement, insbesondere eines Kompressors, einer Druckluftanlage oder einer Vakuumpumpe, mit einem Gehäuse (18) nach einem der vorhergehende Ansprüche, das mit einem Verbindungsteil einer Anschlusseinrichtung verbunden ist, das Verbindungsteil aufweisend
wenigstens einen gasleitenden Raum für den ersten Gasdurchlass (82) des Gehäuses (18),
wenigstens einen Fluiddurchlass für den Fluidauslass (36, 48, 64) des Gehäuses (18) für von dem Gas abgeschiedenes Fluid, der außerhalb des wenigstens einen gasleitenden Raums angeordnet ist,
und auf einer dem gasleitenden Raum abgewandten Seite des wenigstens einen Fluidauslasses (36, 48, 64) wenigstens ein verbindungsseitiges Fluidauslass-Dichtungsteil (68) wenigstens einer Fluidauslass-Dichteinrichtung (92), wobei das gehäuseseitige Fluidauslass-Dichtungsteil (66; 166) der Fluidauslass-Dichteinrichtung (92) mit dem entsprechenden verbindungsseitigen Fluidauslass-Dichtungsteil (68) des Verbindungsteils (16), das zur Verbindung des Gehäuses (18) mit der Anschlusseinrichtung (14) vorgesehen ist, dichtend zusammenwirkt.

## Claims

1. Housing (18) of a means (12) for separating at least one fluid, in particular oil, from gas, in particular air, in particular of an air de-oiling box or of an air de-oiling element, in particular of a compressor, of a compressed-air system or of a vacuum pump, for connecting to a joining part of a connecting means, wherein a filter or separating element (20) is disposed in the housing (18) and the housing (18) is closed by a housing cover (28) which can be connected to the joining part by means of a screwed connection, and the cover has at least one first gas passage (82) which is disposed, with respect to an axis (30), in particular to an assembly axis of the housing (18), centrally, in particular coaxially, at the connecting means (14) and at least one second gas passage (52), which is disposed, with respect to the axis (30), radially outside the at least one first gas passage (82), **characterized by** at least one fluid outlet (36, 48, 64) in the housing cover (28) for fluid separated from the gas, said outlet being disposed, with respect to the axis (30), radially between the at least one first gas passage (82) and the at least one second gas passage (52), wherein between the at least one second gas passage (52) and the at least one fluid outlet (36, 48, 64) at least one housing-sided fluid outlet sealing element (66; 166) of at least one fluid outlet sealing device (92) is disposed, said sealing element being capable of cooperating sealingly with at least one corresponding joint-sided fluid outlet sealing element (68) of a joining part (16) which is provided for connecting the housing (18) to the connecting means (14) and features a sealing surface acting radially inwards or outwards.

2. Housing according to claim 1, **characterized in that** at least one housing-sided fluid outlet sealing element (66; 166) features at least one radially extending sealing lip (66), in particular with respect to the axis (30), in particular to the assembly axis, and/or at least one sealing ring, in particular an O-ring (166).

3. Housing according to one of the preceding claims, **characterized in that** at least one housing-sided fluid outlet sealing element (66; 166) is realized in connection with at least one support part (54) which is connected in one piece or in a plurality of parts to at least one housing section, in particular to a housing cover (28), of the housing (18).

4. Housing according to claim 3, **characterized in that** the support part features a first, in particular cylindrical, section which projects axially outwards from the housing section and and that the housing-side fluid outlet sealing element (66; 166), in particular at the axial end of the support part, projects radially inwards or outwards away from the latter.

5. Housing according to one of the preceding claims, **characterized in that** at least between at least one second gas passage (52) and an environment at least one housing-sided ambient sealing element (80) of at least one ambient sealing means (94) is disposed, said ambient sealing element being capable of sealingly cooperating with at least one corresponding, in particular connection-sided and/or joint-sided ambient sealing element (81) of the connecting means (14) and/or of the joining part.

6. Housing according to one of the preceding claims, **characterized in that** at least one first gas passage (82) features an assembly opening (42) for at least one joining element (16), in particular a nipple or a pipe connection, and that at least one fluid outlet (36, 48, 64) features at least one passage opening (48) which is separated in terms of material from the at least one assembly opening (42).

7. Housing according to one of the preceding claims, **characterized in that** at least one gas passage (82) and/or at least one fluid outlet (36, 48, 64) and/or at least one housing-sided fluid outlet sealing element (66; 166) and/or at least one housing-sided ambient sealing part (80) is realized in/on/with a housing cover (28) of an in particular cup-shaped housing (18).

8. Means (12) for separating at least one fluid, in particular oil, from gas, in particular air, in particular of an air de-oiling box or of an air de-oiling element, in particular of a compressor, of a compressed air system or of a vacuum pump, having a housing (18) according to one of the preceding claims, which is connected to a joining part of a connecting means, the joining part featuring at least one gas-conducting space for the first gas passage (82) of the housing (18),
at least one fluid passage for the fluid outlet (36, 48, 64) of the housing (18) for fluid separated from the gas, said passage being disposed outside the at least one gas-conducting space,
and on a side of the at least one fluid outlet (36, 48, 64) facing away from the gas-conducting space, at least one joint-sided fluid outlet sealing element (68) of at least one fluid outlet sealing device (92), wherein the housing-sided fluid outlet sealing element (66; 166) of the fluid outlet sealing device (92) cooperates sealingly with the corresponding joint-sided fluid outlet sealing element (68) of the joining part (16), which is provided for connecting the housing (18) to the connection means (14).

## Revendications

1. Boîtier (18) d'un dispositif (12) destiné à séparer au moins un fluide, notamment de l'huile, d'un gaz, notamment d'air, notamment d'un boîtier de déshuilage d'air ou d'un élément de déshuilage d'air, notamment d'un compresseur, d'une installation à air comprimé ou d'une pompe à vide, pour la liaison à une pièce de jonction d'un dispositif de raccordement, un élément filtrant ou séparateur (20) étant disposé dans le boîtier (18) et le boîtier (18) étant obturé par un couvercle de boîtier (28) qui peut être relié à la pièce de jonction au moyen d'un raccord vissé, et le couvercle étant équipé d'au moins un premier passage de gaz (82) qui est disposé sur le dispositif de raccordement (14) de manière centrale, notamment coaxiale, par rapport à un axe (30), notamment à un axe de montage du boîtier (18), ainsi que d'au moins un second passage de gaz (52), qui est disposé de manière radiale par rapport à l'axe (30) en dehors du premier passage de gaz (82), au moins au nombre d'un, **caractérisé par** au moins une sortie de fluide (36, 48, 64) placée dans le couvercle de boîtier (28) pour le fluide séparé du gaz, ladite sortie étant disposée en sens radial par rapport à l'axe (30) entre le premier passage de gaz (82), au moins au nombre d'un, et le second passage de gaz (52), au moins au nombre d'un, au moins un élément d'étanchéité de sortie de fluide (66 ; 166) côté boîtier d'au moins un dispositif d'étanchéité de sortie de fluide (92) étant disposé entre le second passage de gaz (52), au moins au nombre d'un, et la sortie de fluide (36, 48, 64), au moins au nombre d'une, ledit élément d'étanchéité pouvant interagir de manière étanche avec au moins un élément d'étanchéité de sortie de fluide (68) correspondant, côté jonction, d'une pièce de jonction (16) destinée à relier le boîtier (18) au dispositif de raccordement (14) et présente une surface d'étanchéité agissant de manière radiale vers l'intérieur ou l'extérieur.

2. Boîtier selon la revendication 1, **caractérisé en ce qu'**au moins un élément d'étanchéité de sortie de fluide (66 ; 166) côté boîtier présente au moins une lèvre d'étanchéité (66) s'étendant de manière radiale, notamment par rapport à l'axe (30), notamment à l'axe de montage, et/ou au moins une bague d'étanchéité, notamment un joint torique (166).

3. Boîtier selon l'une des revendications précédentes, **caractérisé en ce qu'**au moins un élément d'étanchéité de sortie de fluide (66 ; 166) côté boîtier est réalisé en combinaison avec au moins un élément de support (54) qui est relié en une pièce ou en plusieurs pièces à au moins une section de boîtier, notamment à un couvercle de boîtier (28), du boîtier (18).

4. Boîtier selon la revendication 3, **caractérisé en ce que** l'élément de support présente une première section, notamment cylindrique, qui dépasse en sens axial vers l'extérieur de la section de boîtier et que l'élément d'étanchéité de sortie de fluide (66; 166) côté boîtier dépasse, notamment au niveau de l'extrémité axiale de l'élément de support, de manière radiale vers l'intérieur ou l'extérieur en s'écartant de cet élément.

5. Boîtier selon l'une des revendications précédentes, **caractérisé en ce qu'**au moins un élément d'étanchéité par rapport à l'environnement (80) côté boîtier d'au moins un dispositif d'étanchéité par rapport à l'environnement (94) est disposé entre au moins un second passage de gaz (52) et un environnement, ledit élément d'étanchéité pouvant interagir de manière étanche avec au moins un élément d'étanchéité par rapport à l'environnement (81) correspondant, notamment côté raccordement ou côté jonction, du dispositif de raccordement (14) et/ou de la pièce de jonction.

6. Boîtier selon l'une des revendications précédentes, **caractérisé en ce qu'**au moins un premier passage de gaz (82) présente une ouverture de montage (42) pour au moins une pièce de jonction (16), notamment un raccord ou une tubulure, et qu'au moins une sortie de fluide (36, 48, 64) présente au moins une ouverture de passage (48) qui est séparé, en matière de matériau, de l'ouverture de montage (42), au moins au nombre d'une.

7. Boîtier selon l'une des revendications précédentes, **caractérisé en ce qu'**au moins un passage de gaz (82) et/ou au moins une sortie de fluide (36, 48, 64) et/ou au moins un élément d'étanchéité de sortie de fluide (66; 166) côté boîtier et/ou au moins un élément d'étanchéité par rapport à l'environnement (80) côté boîtier est réalisé dans/sur/avec un couvercle de boîtier (28) d'un boîtier (18), notamment en forme de coupe.

8. Dispositif (12) destiné à séparer au moins un fluide, notamment de l'huile, d'un gaz, notamment d'air, notamment d'un boîtier de déshuilage d'air ou d'un élément de déshuilage d'air, notamment d'un compresseur, d'une installation à air comprimé ou d'une pompe à vide, avec un boîtier (18) selon l'une des revendications précédentes, relié à une pièce de jonction d'un dispositif de raccordement, la pièce de jonction présentant
au moins un espace acheminant le gaz pour le premier passage de gaz (82) du boîtier (18),
au moins un passage de fluide pour la sortie de fluide (36, 48, 64) du boîtier (18) pour un fluide séparé du gaz, ledit passage étant disposé en dehors de l'espace acheminant le gaz, au moins au nombre d'un,
et, du côté opposé à l'espace acheminant le gaz de la sortie de fluide (36, 48, 64), au moins au nombre d'une, au moins un élément d'étanchéité de sortie de fluide (68) côté jonction d'au moins un dispositif d'étanchéité de sortie de fluide (92), l'élément d'étanchéité de sortie de fluide (66 ; 166) côté boîtier du dispositif d'étanchéité de sortie de fluide (92) interagissant de manière étanche avec l'élément d'étanchéité de sortie de fluide (68), au moins au nombre d'un, correspondant, côté jonction, de la pièce de jonction (16) destinée à relier le boîtier (18) au dispositif de raccordement (14).
